# EUROPÄISCHE PATENTANMELDUNG

(11) **EP 0 855 245 A1**
(43) Veröffentlichungstag der Anmeldung: **29.07.1998**
(21) Anmeldenummer: 97119028.5
(22) Anmeldetag: 31.10.1997
(51) Int. Cl.: B23Q 11/00

(54) **Werkzeugmaschine mit einer Spülvorrichtung**

(30) Priorität: 28.01.1997 DE 19702974
(71) Anmelder: CHIRON-WERKE GMBH & CO. KG, 78532 Tuttlingen (DE)
(72) Erfinder: Haninger, Rudolf, 78606 Seitingen (DE); Grund, Peter, Dr.-Ing., 78647 Trossingen (DE)
(74) Vertreter: Otten, Hajo, Dr.-Ing.

(57) **Zusammenfassung**

Eine Werkzeugmaschine (10) umfaßt eine Spindel (11) und eine Werkzeugwechselvorrichtung mit mehreren Werkzeugwechslern (25) zum Überführen von Werkzeughaltern (13) zwischen deren jeweiliger Magazinposition und einer Arbeitsposition (53) an der Spindel (11). Es ist zumindest eine Sprühdüse (39) vorgesehen, durch die der Werkzeugwechsler (25) mit Kühlmitteln gespült wird.

## Beschreibung

Die vorliegende Erfindung betrifft eine Werkzeugmaschine mit einer Spindel und einer Werkzeugwechselvorrichtung mit mehreren Werkzeugwechslern zum Überführen von Werkzeughaltern zwischen deren jeweiliger Magazinposition und einer Arbeitsposition an der Spindel.

Eine Werkzeugmaschine der vorstehend genannten Art ist aus der DE 40 31 997 A1 bekannt.

Die bekannte Werkzeugmaschine weist eine in einem Spindelstock drehbar gelagerte Spindel auf, an deren Stirnseite zentrisch eine Aufnahme für Werkzeughalter vorgesehen ist.

Derartige Werkzeughalter sind in der Regel genormt, sie weisen einen Steilkegel auf, der komplementär zu der Aufnahme in der Spindel ist. An den Steilkegel schließt sich nach unten ein verdickter Bund an, an dem eine Greifernut vorgesehen ist. Unterhalb des Bundes erstreckt sich ein Halteschaft, an den Werkzeuge befestigt werden können.

Beim Einspannen des Werkzeughalters in die Spindel gelangt der Steilkegel in Anlage mit einer konischen Innenfläche der Aufnahme, wobei das Verspannen des Werkzeughalters auf bekannte Weise erfolgt.

Derartige Steilkegel können auch als Kegel-Hohlschäfte ausgebildet sein, die mit einer oberen Öffnung versehen sind, durch die Zangensegmente und der Zugkegel eines Spannsystems in das Innere des Kegel-Hohlschaftes eingreifen, um diesen in die Aufnahme einzuziehen. Die Plananlage zwischen Spindel und Werkzeughalter erfolgt hier nicht vorrangig über die konische Außenfläche des Kegel-Hohlschaftes sondern über eine nach oben weisende Ringfläche des verdickten Bundes, die mit der Stirnseite der Spindel in Plananlage kommt, wenn der Werkzeughalter in die Aufnahme eingezogen wird.

An dem Spindelstock ist eine die Spindel umgebende Hülse vorgesehen, die relativ zu der Längsachse der Spindel verfahren werden kann. An der Hülse ist eine Werkzeugwechselvorrichtung angeordnet, die eine Anzahl von Werkzeugwechslern umfaßt, von denen jeder einen wie oben beschriebenen Werkzeughalter trägt. Dazu ist jeder Werkzeugwechsler mit einer Greiferhand ausgestattet, die den Werkzeugwechsler an der Greifernut erfaßt. Die Greiferhand wiederum ist an zwei Greiferarmen gelagert, die eine Parallelogrammführung bilden. Einer der Greiferarme ist mit einer Antriebseinheit aus Zylinder und Kolbenstange verbunden, wobei durch das Aus- und Einfahren der Kolbenstange die Greiferhand und damit der von ihr getragene Werkzeughalter von der Magazinposition in die Arbeitsposition an der Spindel bzw. von der Arbeitsposition zurück in die Magazinposition überführt wird. Durch eine Längsverschiebung der Hülse und damit des Werkzeugwechslers zu der Spindel wird der Steilkegel bzw. der Kegel-Hohlschaft in die Aufnahme eingeschoben bzw. aus ihr zurückgezogen.

In der Magazinposition sind die Werkzeughalter mit ihren Steilkegeln oder Kegel-Hohlschäften in Köcher eingeführt, die die Werkzeughalter vor Verschmutzung schützen.

Es ist bekannt, daß bei der Bearbeitung eines Werkstückes mit dem Werkzeug, das von dem jeweils in die Aufnahme der Spindel eingespannten Werkzeughalter getragen wird, bei der insoweit beschriebenen Werkzeugmaschine der Arbeitsbereich mit Kühlmittel gespült wird, um zum einen das Werkstück zu kühlen und zum anderen die bei der Bearbeitung entstehenden Späne aus dem Arbeitsbereich des jeweiligen Werkzeuges wegzuspülen und ferner Späne vom Werkzeug und dessen Werkzeughalter zu entfernen. Wie es allgemein bekannt ist, erfolgt dieses Spülen im Bereich der Spindel nur während der Bearbeitung des Werkstückes, während des Werkzeugwechsels ist aus offensichtlichen Gründen keine Spülung erforderlich.

Es hat sich nun herausgestellt, daß offenbar wegen unzureichender Spülung dennoch Späne an dem Steilkegel bzw. Kegel-Hohlschaft hängenbleiben, die in der Magazinstellung des jeweiligen Werkzeughalters an der äußeren Konusfläche und/oder an der Ringfläche des verdickten Bundes antrocknen. Bei dem nächsten Einspannen eines derart verschmutzten Werkzeughalters in die Aufnahme der Spindel kommt es dann insbesondere bei Werkzeughaltern mit Kegel-Hohlschaft zu Fehlern bei der Plananlage, so daß das Werkzeug nicht zentrisch und fluchtend zu der Spindelachse eingespannt wird.

Aus diesen Gründen ist es erforderlich, insbesondere bei Werkzeughaltern mit Kegel-Hohlschaft relativ häufig Wartungsarbeiten durchzuführen, um Bearbeitungsfehler durch infolge der Verschmutzung mit Spänen nicht richtig eingespannte Werkzeughalter zu vermeiden.

Vor diesem Hintergrund ist es Aufgabe der vorliegenden Erfindung, die eingangs genannte Werkzeugmaschine auf konstruktiv einfache Weise so weiterzubilden, daß ein sicheres und reproduzierbares Einspannen des Werkzeughalters möglich wird, ohne daß häufige Wartungsarbeiten durchgeführt werden müssen.

Erfindungsgemäß wird diese Aufgabe bei der eingangs genannten Werkzeugmaschine dadurch gelöst, daß eine Spülvorrichtung zum Spülen der Werkzeugmaschine im Bereich der Werkzeugwechselvorrichtung mit Kühlmittel vorgesehen ist.

Die der Erfindung zugrundeliegende Aufgabe wird auf diese Weise vollkommen gelöst.

Die Erfinder der vorliegenden Anmeldung haben nämlich erkannt, daß überraschenderweise die störenden Späne nicht nur während der Bearbeitung eines Werkstückes sondern insbesondere auch während des Auswechselns eines Werkzeughalters auf diesen Werkzeughalter gelangen. Es hat sich herausgestellt, daß mit Spänen verunreinigtes Kühlmittel während des Werkzeugwechselvorganges, während also sowohl der einzuwechselnde als auch der auszuwechselnde Werkzeughalter frei und ungeschützt durch den Arbeitsraum der Werkzeugmaschine bewegt werden, von der Werkzeugwechselvorrichtung selbst abtropft und dabei auf den Werkzeughalter gelangt.

Die überraschend einfache Lösung der oben genannten Verschmutzungsprobleme besteht jetzt erfindungsgemäß darin, nicht nur im Bereich der Werkstückbearbeitung sondern auch außerhalb dieses Bereiches Kühlmittel einzusetzen, um Späne, die z.B. an der Werkzeugwechselvorrichtung anhaften, sofort wieder abzuspülen. Dieser Spülvorgang kann entweder während des Werkzeugwechsels oder aber alternativ bzw. zusätzlich während der Werkstückbearbeitung erfolgen.

Besonders bevorzugt ist es jedoch, wenn die Spülvorrichtung vorzugsweise nur während einer Werkstückbearbeitung die Werkzeugwechselvorrichtung mit Kühlmittel spült.

Es wurde nämlich überraschenderweise festgestellt, daß ein Spülen während des Werkzeugwechsels eher dazu führt, daß die Werkzeughalter mit Spänen verschmutzt werden, da bei diesem Spülen verbleibende Späne dann in noch stärkerem Maße von der Werkzeugwechselvorrichtung abtropfen, als diese ohne Spülen der Fall wäre. Während der Werkstückbearbeitung sind die Werkzeughalter jedoch entweder in ihrer Magazinposition durch die Köcher oder aber in ihrer Arbeitsposition durch die Aufnahme an der Spindel geschützt, so daß herumfliegende Späne oder durch die Spülvorrichtung wieder abgelöste Späne nicht auf die Werkzeughalter gelangen können.

Weiter ist es bevorzugt, wenn die Spülvorrichtung Sprühdüsen umfaßt, die oberhalb der Magazinposition der Werkzeughalter angeordnet sind.

Hier ist von Vorteil, daß die Sprühdüsen so weit oben angeordnet werden, daß auch die sich im Bereich der Magazinposition befindenden Teile der Werkzeugwechselvorrichtung mit gereinigt werden. Die Sprühdüsen sorgen dabei für eine gute Verteilung des Kühlmittels und begrenzen andererseits den Kühlmittelverbrauch, der bei einem Einsatz von schwallartig zugeführtem Kühlmittel erheblich größer wäre.

Bei der insoweit beschriebenen neuen Werkzeugmaschine wird also von oberhalb der Magazinposition der Werkzeughalter her über Sprühdüsen Kühlmittel während der Bearbeitung des Werkstückes zugeführt, um zum einen die Werkzeugwechsler der in Magazinposition befindlichen Werkzeughalter von Spänen zu befreien, die durch die Bearbeitung des Werkstückes im Arbeitsraum der Werkzeugmaschine umherfliegen. Andererseits reicht der Sprühkegel der Sprühdüsen aber auch soweit, daß auch der Werkzeugwechsler des im Einsatz befindlichen Werkzeughalters mit gereinigt wird. Hier ist noch zu bemerken, daß in der Regel 8, 12, 16 oder bis zu 20 Werkzeugwechsler gleich verteilt um die Spindel herum angeordnet sind, wobei die Werkzeugwechsler beim Einsatz des Werkzeughalters jeweils an diesem verbleiben.

In einer Weiterbildung ist es dann bevorzugt, wenn die Spülvorrichtung Sprühdüsen umfaßt, die über eine Ringleitung miteinander verbunden sind, wobei die Ringleitung vorzugsweise in sich geschlossen ist und einen Zuführstutzen als Kühlmittelanschluß aufweist.

Diese Maßnahme ist konstruktiv von Vorteil, der Einsatz einer insbesondere in sich geschlossenen Ringleitung, von der die einzelnen Sprühdüsen abgehen, erfordert nur minimale konstruktive Vorkehrungen, um neue oder auch bestehende Werkzeugmaschinen nachträglich mit der neuen Spülvorrichtung auszurüsten.

Ferner ist es bevorzugt, wenn jede Sprühdüse zwischen zwei benachbarten Werkzeugwechslern angeordnet ist, wobei vorzugsweise für je zwei Werkzeugwechsler eine gemeinsame Sprühdüse vorgesehen ist.

Auch diese Maßnahme ist konstruktiv von Vorteil, durch die Anordnung der Sprühdüsen zwischen zwei benachbarten Werkzeugwechslern wird dafür gesorgt, daß auch seitlich an Teilen des Werkzeugwechslers anhaftende Späne sicher abgespült werden. Die Verwendung von einer Sprühdüse für je zwei Werkzeugwechsler bietet dagegen den Vorteil, mit einer relativ geringen Anzahl von Sprühdüsen auszukommen, so daß die Montage und Justierarbeiten relativ gering sind, die für die Ausrüstung einer Werkzeugmaschine mit einer derartigen Spülvorrichtung erforderlich sind.

Allgemein ist es bevorzugt, wenn jeder Werkzeugwechsler eine fluidbetätigte Antriebseinheit mit Kolbenstange und Zylinder aufweist, wobei die Kolbenstange an ihrem einen Ende mit einem Greiferarm verbunden ist, und die Sprühdüsen oberhalb der Greiferarme angeordnet sind.

Auch diese Maßnahme ist konstruktiv von Vorteil, die Sprühdüsen werden nämlich dort angeordnet, wo auch bei bestehenden Werkzeugmaschinen genügend Raum zur Anbringung der Spülvorrichtung vorhanden ist.

Ein Verfahren zum Betreiben der erfindungsgemäßen Werkzeugmaschine umfaßt folglich die Schritte:
a) Überführen eines Werkzeughalters in seine Arbeitsposition,
b) Bearbeiten eines Werkstückes mit einem von dem Werkzeughalter gehaltenen Werkzeug, und
c) Spülen während des Bearbeitens des Werkstückes im Bereich der Werkzeugwechselvorrichtung mit Kühlmittel.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der beigefügten Zeichnung dargestellt und wird in der nachfolgenden Beschreibung näher erläutert. Es zeigen:
- Fig. 1: eine Seitenansicht, teilweise geschnitten, durch einen Werkzeugwechsler einer erfindungsgemäßen Werkzeugmaschine, mit einem in Magazinposition befindlichen Werkzeughalter;
- Fig. 2: eine Darstellung, ähnlich Fig. 1, jedoch für den Werkzeughalter in seiner Arbeitsposition; und
- Fig. 3: eine schematische Darstellung einer Draufsicht auf die neue Werkzeugmaschine.

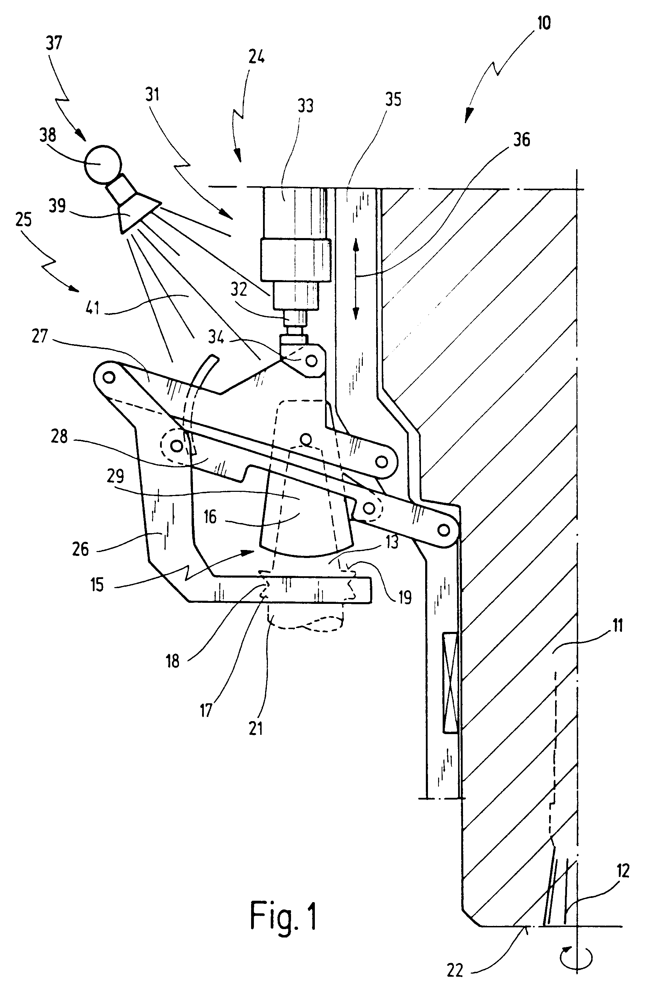

In Fig. 1 ist mit 10 eine Werkzeugmaschine bezeichnet, die eine Spindel 11 mit einer Aufnahme 12 für Werkzeughalter aufweist. Ein derartiger Werkzeughalter 13 ist in Fig. 1 in seiner Magazinposition 15 gezeigt.

Der Werkzeughalter 13 weist einen Kegel-Hohlschaft 16 auf, der komplementär zu der Aufnahme 12 ausgebildet ist. Unten an den Kegel-Hohlschaft 16 schließt sich ein verdickter Bund 17 an, an dem eine Greifernut 18 vorgesehen ist. Ferner weist der Bund 17 eine nach oben zeigende Ringfläche 19 sowie einen von der Ringfläche 19 abgelegenen Halteschaft 21 zur Aufnahme eines Werkzeuges auf. Mit seiner Ringfläche 19 kommt der Werkzeughalter 13 in Anlage mit einer Stirnfläche 22 der Spindel 11, wodurch für einen zentrierten Sitz mit Plananlage gesorgt wird.

Die Werkzeugmaschine 10 weist ferner eine Werkzeugwechselvorrichtung 22 auf, die eine Reihe von Werkzeugwechslern 25 umfaßt, die um die Spindel 11 herum gleich verteilt angeordnet sind. Jeder Werkzeugwechsler 25 umfaßt eine Greiferhand 26, die den Werkzeughalter 13 an der Greifernut 18 hält. Die Greiferhand 26 ist an zwei Greiferarmen 27, 28 befestigt, die in an sich bekannter Weise eine Parallelogrammführung bilden. An den beiden Greiferarmen 27, 28 ist noch ein Köcher 29 vorgesehen, in den der Werkzeughalter 13 in seiner Magazinposition 15 zumindest mit seinem Kegel-Hohlschraft 16 hineinragt, wodurch der Kegel-Hohlschaft vor umherfliegenden Spänen geschützt ist.

Oberhalb der Greiferarme 27, 28 ist eine Antriebseinheit 31 vorgesehen, die in ebenfalls bekannter Weise eine Kolbenstange 32 sowie einen Zylinder 33 umfaßt. Die Kolbenstange 32 ist mit ihrem unteren Ende 34 an dem Greiferarm 27 befestigt.

Die beiden Greiferarme 27, 28 sowie jeder Werkzeugwechsler 25 sind an einer die Spindel 11 umgebenden Hülse 35 befestigt, die längs eines bei 36 angedeuteten Pfeiles verschiebbar ist.

Oberhalb des in Magazinposition 15 befindlichen Werkzeughalters 13 ist eine Spülvorrichtung 37 vorgesehen, die eine Ringleitung 38 umfaßt, an der zumindest eine Sprühdüse 39 befestigt ist. Diese Sprühdüse 39 gibt einen Sprühkegel 41 von Kühlmittel ab, durch den die gesamte Werkzeugwechselvorrichtung derart während der Bearbeitung eines Werkstückes gespült wird, das Späne, die in den Bereich der Werkzeugwechselvorrichtung 24 gelangen, sofort wieder abgespült werden.

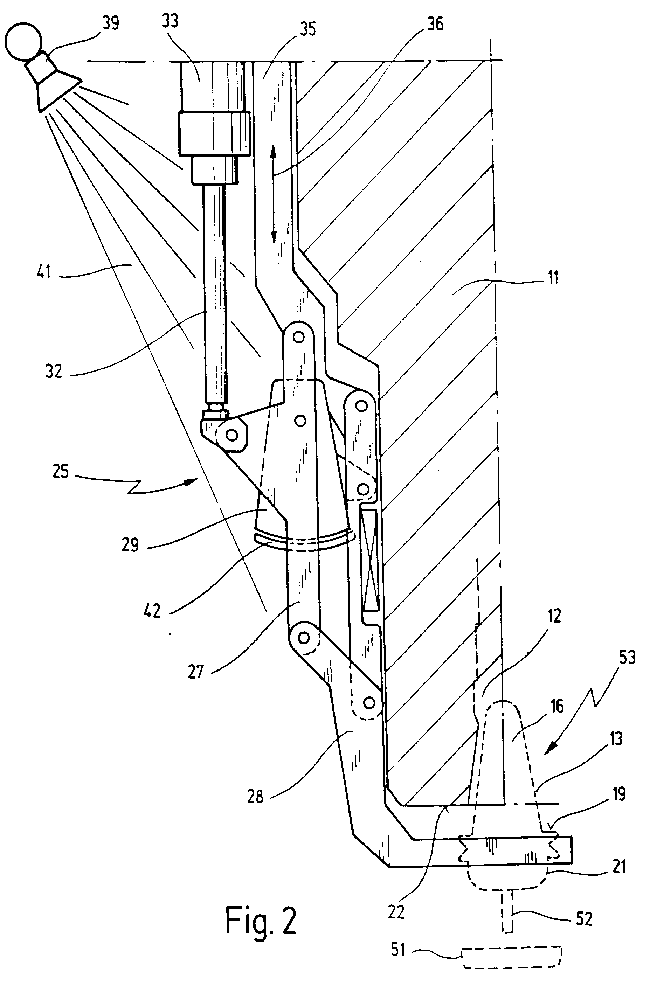

Zum Einwechseln des Werkzeughalters 13 aus Fig. 1 in die Aufnahme 12 wird die Kolbenstange 32 ausgefahren, wodurch sich die Greiferhand 26 unter die Spindel 11 verschwenkt, wie es in Fig. 2 dargestellt ist. Hierzu fährt die Hülse 35 in Richtung des Pfeiles 36 nach unten und bewegt sich nach erfolgreichem Überführen des Werkzeughalters 13 aus seiner Magazinposition in die in Fig. 2 gezeigte Arbeitsposition 53 wieder nach oben, wodurch der Kegel-Hohlschaft 16 in die Aufnahme 12 gelangt.

In Fig. 2 ist eine Momentaufnahme dieses Hochfahrens der Hülse 35 längs des Pfeiles 36 gezeigt, wo die Ringfläche 19 noch nicht in Plananlage mit der Stirnfläche 22 gelangt ist, dies erfolgt erst, wenn die Hülse 35 noch weiter nach oben verfahren wurde. Die Greiferhand 26 verbleibt während der Bearbeitung am Werkzeughalter 13.

In Fig. 2 ist ferner zu erkennen, daß der Köcher 29 jetzt durch einen Deckel 42, der an dem Greiferarm 27 angeordnet ist, geschützt ist.

Der Sprühkegel 41 der Sprühdüse 39 überstreicht auch jetzt den gesamten Werkzeugwechsler 25, so daß umherfliegende Späne sich nicht an dem Werkzeugwechsler 25 ansetzen können.

Während der Überführung eines Werkzeughalters zwischen der Magazinposition 15 gemäß Fig. 1 und der Arbeitsposition 53 gemäß Fig. 2 sind der Kegel-Hohlschaft sowie die Ringfläche 19 nicht geschützt. Ohne die Sprühvorrichtung 37 würden während dieses Überführens jetzt Späne, die zusammen mit Kühlmittel von Teilen der Werkzeugwechselvorrichtung 24 abtropfen, die Ringfläche 19 und/oder den Kegel-Hohlschaft 16 verschmutzen können, wodurch ein lagerichtiges Einsetzen des Werkzeughalters 13 in die Aufnahme 12 beeinträchtigt werden könnte. Durch die Spülvorrichtung 37 wird jetzt bereits ein Anhaften von Spänen an Teilen der Werkzeugwechselvorrichtung 24 während des Bearbeitens eines Werkstückes verhindert, so daß während des Werkzeugwechsels keine Gefahr der Verschmutzung der ein- bzw. ausgewechselten Werkzeughalter besteht, da keine Späne vorhanden sind, die abtropfen können.

Aus diesen Gründen ist es bei der neuen Werkzeugmaschine 10 nicht erforderlich, die Werkzeugwechsler 25 und/oder die Werkzeughalter 13 in häufigen Wartungsintervallen zu reinigen, um die mit der ohne die Spülvorrichtung 37 erfolgenden Verschmutzung der Werkzeughalter einhergehenden Probleme zu beseitigen.

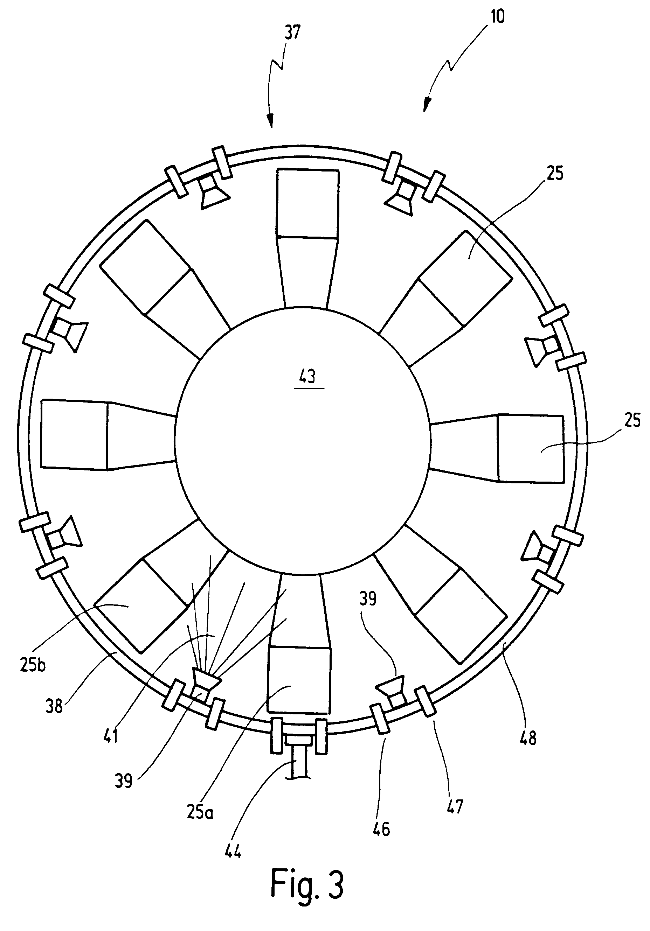

In Fig. 3 ist in einer Draufsicht schematisch die neue Werkzeugmaschine 10 gezeigt, um deren Spindelgehäuse 43 herum die Ringleitung 38 verläuft. Die Werkzeugmaschine 10 umfaßt insgesamt acht Werkzeugwechsler 25, wobei zwischen je zwei benachbarten Werkzeugwechslern 25 eine Sprühdüse 39 vorgesehen ist. Im unteren Bereich der Fig. 3 ist ein Zufuhrstutzen 44 für Kühlmittelzufuhr gezeigt. Durch diesen Zufuhrstutzen 44 wird Kühlmittel in die Ringleitung 38 gepreßt, das dann durch die einzelnen Sprühdüsen 39 auf die Werkzeugwechsler 25 versprüht wird.

In Fig. 3 ist ferner zu erkennen, daß die Sprühdüsen 39 jeweils zwischen zwei Flanschen 46, 47 angeordnet sind, wobei zwischen Flanschen benachbarter Sprühdüsen 39 ein gebogenes Rohrstück 48 verläuft. Mit anderen Worten, die gesamte Spülvorrichtung 37 umfaßt acht gebogene Rohrstücke 48 sowie acht Sprühdüsen 39, die jeweils über die Flansche 46, 47 mit den angrenzenden Rohrstücken 48 verbunden sind. Ferner ist noch ein Zufuhrstutzen 44 für Kühlmittel erforderlich, so daß die Spülvorrichtung 37 insgesamt konstruktiv sehr einfach aufgebaut ist.

In Fig. 3 ist bei 41 wieder ein Sprühkegel gezeigt, der hier sowohl den Werkzeugwechsler 25a als auch den Werkzeugwechsler 25b spülen kann, so daß auf jede zweite Sprühdüse 39 verzichtet werden könnte. Mit anderen Worten, um insgesamt acht Werkzeugwechsler 25 zu spülen, sind insgesamt nur vier Sprühdüsen 39 erforderlich.

Zurückkehrend zu Fig. 2 sei noch darauf hingewiesen, daß dort bei 51 ein zu bearbeitendes Werkstück gezeigt ist, während bei 52 ein an dem Halteschaft 21 befestigtes Werkzeug 52 zu sehen ist.

## Patentansprüche

1. Werkzeugmaschine mit einer Spindel (11) und einer Werkzeugwechselvorrichtung (24) mit mehreren Werkzeugwechslern (25) zum Überführen von Werkzeughaltern (13) zwischen deren jeweiliger Magazinposition (15) und einer Arbeitsposition (53) an der Spindel (11),
dadurch gekennzeichnet, daß eine Spülvorrichtung (37) zum Spülen der Werkzeugmaschine (10) im Bereich der Werkzeugwechselvorrichtung (24) mit Kühlmittel vorgesehen ist.

2. Werkzeugmaschine nach Anspruch 1, dadurch gekennzeichnet, daß die Spülvorrichtung (37) vorzugsweise nur während einer Werkstückbearbeitung die Werkzeugwechselvorrichtung (24) mit Kühlmittel spült.

3. Werkzeugmaschine nach Anspruch 1 oder 2, dadurch gekennzeichnet, daß die Spülvorrichtung (37) Sprühdüsen (39) umfaßt, die oberhalb der Magazinposition (15) der Werkzeughalter (13) angeordnet sind.

4. Werkzeugmaschine nach einem der Ansprüche 1 bis 3, dadurch gekennzeichnet, daß die Spülvorrichtung (37) Sprühdüsen (39) umfaßt, die über eine Ringleitung (38) miteinander verbunden sind.

5. Werkzeugmaschine nach Anspruch 4, dadurch gekennzeichnet, daß die Ringleitung (38) in sich geschlossen ist und einen Zufuhrstutzen (44) als Kühlmittelanschluß aufweist.

6. Werkzeugmaschine nach einem der Ansprüche 3 bis 5, dadurch gekennzeichnet, daß jede Sprühdüse (39) zwischen zwei benachbarten Werkzeugwechslern (25a, 25b) angeordnet ist.

7. Werkzeugmaschine nach Anspruch 6, dadurch gekennzeichnet, daß für je zwei Werkzeugwechsler (25a, 25b) eine gemeinsame Sprühdüse (39) vorgesehen ist.

8. Werkzeugmaschine nach einem der Ansprüche 1 bis 7, dadurch gekennzeichnet, daß jeder Werkzeugwechsler (25) eine fluidbetätigte Antriebseinheit (31) mit Kolbenstange (32) und Zylinder (33) aufweist, wobei die Kolbenstange (32) an ihrem einen Ende (34) mit einem Greiferarm (27) verbunden ist, und Sprühdüsen (39) der Spülvorrichtung (37) oberhalb der Greiferarme (27) angeordnet sind.

9. Verfahren zum Betreiben einer Werkzeugmaschine (10) nach einem der Ansprüche 1 bis 8, mit den Schritten:
a) Überführen eines Werkzeughalters (13) in seine Arbeitsposition (53),
b) Bearbeiten eines Werkstückes (51) mit einem von dem Werkzeughalter (13) gehaltenen Werkzeug (52), und
c) Spülen während des Bearbeitens des Werkstückes (51) im Bereich der Werkzeugwechselvorrichtung (24) mit Kühlmittel.
